## Europäisches Patentamt
## European Patent Office
## Office européen des brevets

(19)

(11) Numéro de publication: **0 065 440
B1**

(12) # FASCICULE DE BREVET EUROPEEN

(45) Date de publication du fascicule du brevet:
07.03.84

(51) Int. Cl.³: **H 01 G 1/14**

(21) Numéro de dépôt: **82400760.3**

(22) Date de dépôt: **27.04.82**

---

(54) **Connexion en forme d'épingle pour composant électrique muni de deux zones de contact, et son utilisation pour la connexion dudit composant.**

---

(30) Priorité: **08.05.81 FR 8109231**

(43) Date de publication de la demande:
**24.11.82 Bulletin 82/47**

(45) Mention de la délivrance du brevet:
**07.03.84 Bulletin 84/10**

(84) Etats contractants désignés:
**AT DE**

(56) Documents cités:
**DE - A - 2 107 365
DE - A - 2 534 755
FR - A - 1 182 923
FR - A - 2 109 207
FR - A - 2 189 986**

(73) Titulaire: **L.C.C.-C.I.C.E. - COMPAGNIE EUROPEENNE DE COMPOSANTS ELECTRONIQUES, 101, Boulevard Murat, F-75781 Paris Cedex 16 (FR)**

(72) Inventeur: **Mentzer, Régis, THOMSON-CSF SCPI 173, bld Haussmann, F-75379 Paris Cedex 08 (FR)**

(74) Mandataire: **Vesin, Jacques et al, THOMSON-CSF SCPI 173, Bld Haussmann, F-75379 Paris Cedex 08 (FR)**

---

ACTORUM AG

Connexion en forme d'épingle pour composant éléctrique muni de deux zones de contact, et son utilisation pour la connexion dudit composant

La présente invention concerne une connexion en forme d'épingle pour composant électrique muni de deux zones de contact comportant deux bras latéraux reliés entre eux à leur extrémité inférieure, chaque extrémité supérieure desdits bras étant destinée à être reliée à une zone de contact du composant, ainsi que décrit dans le brevet FR–A–2109207. Elle concerne également son utilisation pour la connexion dudit composant.

Ce type de connexions en forme d'épingle, disposées sur une bande support est plus particulièrement utilisée dans la fabrication des condensateurs. Chaque bande support de connexions est munie d'une pluralité de paires d'encoches régulièrement réparties le long dudit support. Chaque paire d'encoches est formée d'une encoche supérieure et d'une encoche inférieure dans lesquelles viennent se glisser les épingles. Les condensateurs sont fixés entre les deux bras de l'épingle sensiblement à l'extrémité de ceux-ci. Une telle technique de fixation de condensateurs à l'aide d'une bande munie d'épingles telles que décrites ci-dessus est particulièrement utilisée dans le domaine de la fabrication des condensateurs plans en particulier pour les condensateurs de type parallélépipédique. On sait en effet, que pour fabriquer des condensateurs en céramique constitués simplement d'un disque de céramique revêtu de deux armatures métalliques, les connexions en forme d'épingles que l'on utilise sont telles que chacun des bras vient se positionner de part et d'autre du disque. Il est donc nécessaire de réaliser dans ce cas un pliage-cambrage des connexions afin de les amener respectivement au-dessus et au-dessous dudit disque. Les deux bras de la connexion étant reliés entre eux pour former une épingle, ils exercent mutuellement l'un sur l'autre une réaction qui provoque un pincement du disque et un maintien de celui-ci entre les deux bras de ladite épingle, permettant une manipulation aisée au cours des stades suivants de fabrication des condensateurs. Afin d'éviter des problèmes de pivotement du disque entre les deux bras, on donne généralement à l'épingle une forme telle que les forces appliquées par les bras de l'épingle soient situées dans un même plan.

Toutefois, pour les condensateurs parallélépipédiques le problème se pose différemment. En effet, les métallisations sur lesquelles les bras de l'épingle doivent s'appuyer ne sont plus dans ce cas disposées sur les faces supérieure et inférieure du condensateur mais disposées latéralement. Ces connexions, généralement réalisées par schoopage, sont par conséquent de faible épaisseur et de surface limitée de l'ordre du millimètre carré, disposées latéralement par rapport auxdites faces supérieure et inférieure du condensateur. Dans ces conditions, on comprend que la connexion des bras aux zones de schoopage ne soit pas un problème aisé à résoudre.

Les épingles que l'on utilise sont alors disposées de telle sorte que chaque bras de ladite épingle vienne au contact desdites surfaces de connexion ou schoopage. Lorsque le contact physique est établi entre l'extrémité des bras et les connexions, l'assemblage mécanique et électrique des deux s'effectue généralement par immersion dans un bain de soudure liquide. Au cours de cette opération, se posent différents problèmes techniques particulièrement difficiles à résoudre:

– Le premier problème qui se pose est de maintenir une force d'application suffisante des bras sur les connexions électriques latérales pour éviter qu'au cours de l'introduction et la sortie du condensateur du bain de soudure, le pavé ne se désolidarise des bras.

– Le second problème qui se pose est d'éviter au cours des mêmes opérations une rotation du condensateur par rapport aux bras. Dans ce cas, en effet, comme dans le cas précédent, les condensateurs ainsi réalisés ne peuvent être utilisés par la suite.

Les connexion en forme d'épingle selon l'invention permettent d'éviter ces inconvénients et de résoudre les problèmes cités plus haut.

Dans ce but, lesdites connexions sont caractérisées en ce que l'ensemble des deux extrémités supérieures des bras latéraux et/ou des zones de contact du composant possède au moins trois bossages, chaque bossage s'appuyant respectivement sur une zone de contact ou sur une des extrémités supérieures des bras latéraux evitant les mouvements de translation et/ou de rotation relatifs desdites zones de contact et desdites extrémités des bras. De préférence, ces bossages seront répartis sur les deux bras, deux bossages n'étant pas disposés sur un même axe perpendiculaire aux bras.

Selon un mode préférentiel de réalisation, chaque extrémité supérieure d'un bras possède une zone aplatie disposée en regard de l'autre bras et supportant le ou les bossages. De préférence, chaque zone aplatie se terminera par un palier inférieur orienté vers l'autre bras, sur lequel vient s'appuyer le composant.

Il est nécessaire d'avoir au moins trois bossages sur l'enseble des deux méplats et/ou zones de contact afin d'éviter les phénomènes de rotation du condensatuer lorsque celui-ci est immergé dans le bain de soudure. Le nombre de bossage n'est bien entendu pas limité mais compte tenu généralement des dimensions des condensateurs, fabriqués, on préférera généralement ne pas utiliser plus de cinq bossages étant entendu que la solution avec trois bossages donne des résultats particulièrement satisfaisants. Toute-fois, il est possible de remplacer un ou deux bossages par le rebord inférieur du méplat ou zone aplatie formant un palier incliné. Dans ce cas, ledit méplat doit être réalisé bien entendu sur la face interne de l'extrémité du bras correspondant de l'épingle de manière à créer aux environs de sa base un petit rebord sur lequel vient s'appuyer le condensateur. Cette solution peut être adoptée pour les deux bras de l'épingle et dans ces conditions il suffit d'un bossage par exemple à proximité de l'extrémité de l'un des méplats pour obtenir le résultat souhaité. Suivant le type de condensateurs réalisés et le type de matériaux utilisés, l'homme de l'art déterminera par de simples essais de routine la solution la mieux adaptée à son problème.

L'invention sera mieux comprise à l'aide des exemples de réalisation ci-joints donnés à titre non limitatif, conjointement avec les figures qui représentent:

- la figure 1, une bande support de connexions après pliage et insertion des épingles,
- la figure 2, une vue en coupe d'un condensateur pincé latéralement par les bras d'une épingle,
- la figure 3, une autre variante de réalisation de la figure 2 dans laquelle les bras de l'épingle ont subi un cambrage.
- la figure 4, une variante de réalisation de l'invention dans laquelle l'un des bossages se trouve sur le condensateur.

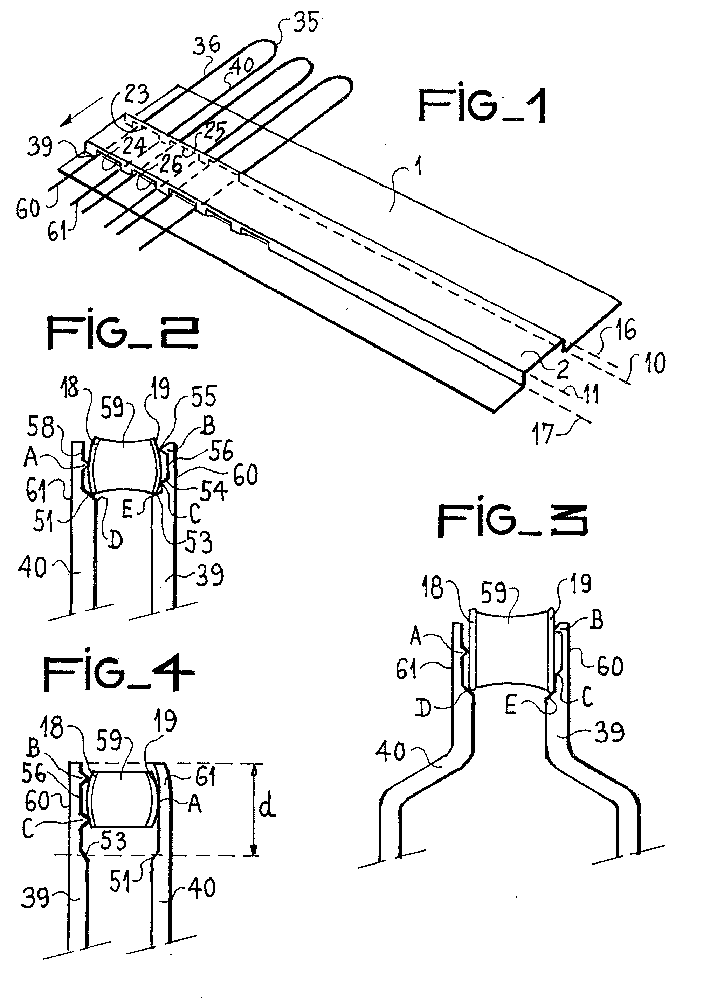

Sur la figure 1, est représenté un exemple de réalisation d'une bande support munie d'épingles pour la connexion de condensateurs. Après pliage le long des lignes 10, 16, 11 et 17 formées par l'alignement des perforations en forme de U, on forme ainsi des languettes 23, 24, 25, 26 ... Les languettes telles que 23 sont situées dans un plan 2, tandis que les languettes telles que 24 sont situées dans le plan 1. L'épingle 36 est introduite dans les perforations correspondantes en forme de U. Chaque épingle 36 est formée de deux bras latéraux 39 et 40 reliés à leur extrémité inférieure 35, chaque extrémité supérieure 60, 61 étant destinée à recevoir une zone de contact du condensateur ainsi que cela va être expliqué ci-après.

Sur la figure 2, sont représentées les extrémités 60 et 61 d'une épingle 36 selon l'invention. Sur cette figure, les mêmes éléments que ceux de la figure précédente portent les mêmes références. Les extrémités 60 et 61 des bras 39 et 40 de l'épingle se composent respectivement d'un palier 53, d'un bossage 54 (point C) et d'un bossage 55 (point B) relié au précédent par un palier vertical 56, tandis que l'extrémité du bras 40 comporte un palier incliné 51 et un palier vertical 58 sur lequel est situé un bossage A. Les contacts entre les zones de contact 18 et 19 du condensateur 59 et les extrémités aplaties ou méplats 60 et 61 de ces bras sont réalisés respectivement au point A, B, C, D, et E. Le condensateur 59 s'appuie donc sur les deux paliers inclinés 53 et 51 (points E et D respectivement) tandis que les bossages 54 et 55 assurent le contact avec la zone de contact 19 aux points C et B. Le bossage A assure le contact avec 18 sur l'extrémité 61, A et C d'une part, et A et B d'autre part n'étant pas sur un même axe perpendiculaire aux extrémités aplaties 60 et 61 des bras 39 et 40. Bien entendu, un très grand nombre de variantes peut être envisagé pour ces extrémités: il est essentiel que dans tous les cas, il y ait au moins trois points de contact entre l'ensemble des deux branches et les connexions latérales du condensateur 59, les points de contact étant choisis parmi les points tels que A, B, C, D et E. En particulier, les paliers D et E ne sont pas nécessaires bien qu'ils facilitent grandement les opérations en particulier le maintien du condensateur. Les extrémités 60 et 61 des bras 39 et 40 seront généralement réalisées par aplatissement et de manière à former les deux paliers inclinés D et E disposés vers l'intérieur de l'épingle. (Dans toute la suite de l'exposé, il est bien entendu que le mot bossage désigne aussi bien A, B et C que les paliers C et D).

La figure 3 représente une variante de la figure 2, dans laquelle le condensateur 59 a une forme plus rectangulaire que dans le cas de la figure 2. Les pattes 39 et 40 sont munies de cambrage afin de les mettre à un écartement conforme à la demande de l'utilisateur. Sur cette figure, les mêmes éléments que ceux de la figure 2 portent les mêmes références, la connexion des bras et du composant étant réalisée de la même manière.

La figure 4 représente une variante de l'invention dans laquelle l'un des bossages est porté par le condensateur lui-même. Sur cette figure, les mêmes éléments que ceux des figures précédentes portent les mêmes références. Dans cette variante de réalisation, l'extrémité 60 du bras 39 porte deux bossages B et C tandis que l'extrémité 61 du bras 40 est simplement une partie mince aplatie au niveau du contact A avec le condensateur 59. Celui-ci possède au voisinage du point A une forme très bombée tenant lieu de bossage. De préférence, le bras 40 sera légèrement courbé dans le même sens que la courbure du bossage du condensateur 59 au point A de manière à augmenter l'effet de pince des bras sur ledit condensateur. Une telle variante de réalisation est particulièrement importante dans le cas de condensateurs possédant une forme relativement arrondie. On a en effet constaté que dans ce cas le bossage porté par le condensateur lui-même suffisait pour maintenir en place ledit condensateur entre les bras 39 et 40 à l'aide des bossages B et C. Bien entendu, comme dans le cas précédent, A et B d'une part et A et C d'autre part ne sont pas sur un même axe perpendiculaire aux deux bras 39 et 40. Il est à noter que, sur cette figure, les zones aplaties 60 et 61 ont une longueur d supérieure à la hauteur du composant 59. Les paliers inclinés 51 et 53, n'ont donc pas de fonction de bossage dans ce cas précis, le condensateur étant maintenu par les trois bossages A, B et C uniquement.

L'utislisation des bandes support munies d'épingles telles que décrites à l'aide des figures précédentes se fait de la même manière que les bandes support actuellement disponibles dans le commerce. Les bras sont positionés latéralement sur les zones de contact du composant. La présence d'au moins trois points de contact sur l'ensemble des deux bras, à savoir A, B et C, évite ainsi au cours des opérations de fabrication qui suivent, une désolidarisation dudit condensateur desdites pattes ou une rotation de celui-ci rendant dans un cas comme dans l'autre inutilisables les condensateurs ainsi fabriqués.

Il est bien entendu également que l'utilisation de l'invention n'est pas limitée aux seuls condensateurs: par ce terme on a voulu désigner tout type de composant électrique nécessitant une connexion par pincement et/ou soudure sur deux faces opposées de celui-ci telles que 18 et 19.

## Revendications

1. Connexion en forme d'épingle pour composant électrique (59) muni de deux zones de contact (19, 19) opposées, comportant deux bras latéraux (39, 40) reliés entre eux par leur extrémité inférieure (35), chaque extrémité supérieure (60, 61) desdits bras étant destinée à être reliée à l'une des zones de contact (19, 18) du composant (59), caractérisée en ce que l'ensemble des deux extrémités supérieures (60, 61) des bras latéraux et/ou des zones de contact (18, 19) du composant (59) possède au moins trois bossages (A, B, C), chaque bossage s'appuyant respectivement sur une zone de contact (18, 19) ou sur une des extrémités (60, 61) supérieures des bras latéraux, évitant les mouvements de translation et/ou de rotation relatifs desdites zones de contact et desdites extrémités des bras.

2. Connexion selon la revendication 1, caractérisée en ce que les bossages (A, B, C) sont répartis sur les deux bras, deux bossages n'étant pas sur un même axe perpendiculaire aux bras.

3. Connexion selon la revendication 1 ou 2, caractérisée en ce que chaque extrémité supérieure (60, 61) des bras lateraux possède une zone aplatie (56, 58), disposée en regard de l'autre bras et supportant le ou les bossages.

4. Connexion selon la revendication 3, caractérisée en ce que chaque zone aplatie se termine par un palier inférieur (53, 51) orienté vers l'autre bras sur lequel vient s'appuyer le composant.

5. Connexion selon l'une des revendications 1 à 4, caractérisée en ce que chaque bras est cambré avant sont extrémité supérieure (60, 61).

6. Connexion selon l'une des revendications 1 à 5, caractérisée en ce que le composant est un condensateur de forme parallélépipédique muni de deux zones de connexions latérales (18, 19).

7. Utilisation de la connexion selon l'une des revendications 1 à 6, sur un support muni d'encoches, les bras de l'épingle se resserrant sur le composant.

## Patentansprüche

1. Nadelförmige Verbindung für ein elektrisches Bauteil (59), das mit zwei einander gegenüberliegenden Kontaktzonen (18, 19) versehen ist, mit zwei seitlichen Armen (39, 40), die an ihrem unteren Ende (35) miteinander verbunden sind, wobei jedes obere Ende (60, 61) der Arme dazu bestimmt ist, mit einer der Kontaktzonen (19, 18) des Bauteils (59) verbunden zu werden, dadurch gekennzeichnet, dass die Gesamtheit der zwei oberen Enden (60, 61) der seitlichen Arme und/oder der Kontaktzonen (18, 19) des Bauteils (59) wenigstens drei Vorsprünge (A, B, C) besitzt, wobei jeder Vorsprung sich auf einer der Kontaktzonen (18, 19) oder auf einem der oberen Enden (60, 61) der seitlichen Arme abstützt, wodurch relative Translations- und/oder Rotationsbewegungen zwischen den Kontaktzonen und den Enden der Arme verhindert werden.

2. Verbindung nach Anspruch 1, dadurch gekennzeichnet, dass die Vorsprünge (A, B, C) auf den beiden Armen verteilt sind, wobei zwei Vorsprünge sich nicht auf einer selben Achse befinden, die senkrecht zu den Armen ist.

3. Verbindung nach Anspruch 1 oder 2, dadurch gekennzeichnet, dass jedes obere Ende (60, 61) der seitlichen Arme eine abgeplattete Zone (56, 58) besitzt, die gegenüber dem anderen Arm angeordnet ist und den Vorsprung oder die Vorsprünge trägt.

4. Verbindung nach Anspruch 3, dadurch gekennzeichnet, dass jede abgeplattete Zone in einer unteren Stufe (53, 51) endet, die zu dem anderen Arm hin orientiert ist, auf dem sich das Bauteil abstützt.

5. Verbindung nach einem der Ansprüche 1 bis 4, dadurch gekennzeichnet, dass jeder Arm vor seinem oberen Ende (60, 61) gewölbt ist.

6. Verbindung nach einem der Ansprüche 1 bis 5, dadurch gekennzeichnet, dass das Bauteil ein quaderförmiger Kondensator ist, der mit zwei seitlichen Anschlusszonen (18, 19) versehen ist.

7. Verwendung der Verbindung nach einem der Ansprüche 1 bis 6 auf einem mit Einschnitten versehenen Träger, wobei die Arme der Nadel das Bauteil einspannen.

## Claims

1. Pin-shaped connection for an electrical component (59) provided with two opposed contacting zones (18, 19), comprising two lateral arms (39, 40) interconnected on their lower ends (35), each upper end (60, 61) of said arms being adapted to be connected to one of the contacting zones (18, 19) of the component (59), characterized in that the two upper ends (60, 61) of the lateral arms and/or the contacting zones (18, 19) of the component (59) together have at least three protuberances (A, B, C), each protuberance bearing on one contacting zone (18, 19) or on one upper end (60, 61) of the lateral arms, respectively, avoiding relative translational and/or rotational movement between said contacting zones and said ends of the arms.

2. Connection according to claim 1, characterized in that the protuberances (A, B, C) are distributed on the two arms, two protuberances not lying on a same axis which is perpendicular to the arms.

3. Connection according to claims 1 or 2, characterized in that each upper end (60, 61) of the lateral arms has a flattened zone (56, 58) facing the other arm and carrying the protuberance or protuberances.

4. Connection according to claim 3, characterized in that each flattened zone terminates in a lower shoulder (53, 25, 51) oriented towards the other arm and on which the component bears.

5. Connection according to any of claims 1 to 4, characterized in that each arm is cambered before its upper end (60, 61).

6. Connection according to any of claims 1 to 5, characterized in that the component is a capacitor having the shape of a parallelepiped provided with two lateral connection zones (18, 19).

7. Use of the connection according to any of claims 1 to 6 on a carrier provided with slots, the component being clamped between the arms of the pin.

0 065 440

FIG_1

FIG_2

FIG_3

FIG_4

7